Europäisches Patentamt

European Patent Office

Office européen des brevets

(11) Publication number: **0 436 510 A2**

# EUROPEAN PATENT APPLICATION

(21) Application number: 91300030.3

(51) Int. Cl.⁵: **B60S 1/38**

(22) Date of filing: 02.01.91

(30) Priority: 03.01.90 GB 9000099

(43) Date of publication of application:
10.07.91 Bulletin 91/28

(84) Designated Contracting States:
BE DE ES FR IT

(71) Applicant: TRICO-FOLBERTH LIMITED
Great West Road
Brentford Middlesex TW8 9HP (GB)

(72) Inventor: Mower, Peter
9, Blandford Avenue
Whitton, Twickenham, Middlesex (GB)
Inventor: Frimley, Charles Henry
25, Redford Road
Windsor, Berkshire (GB)

(74) Representative: Pedder, James Cuthbert
J.C. Pedder & Co. 38 Norbury Cross
Norbury London SW16 4JQ (GB)

(54) Windscreen wiper blade.

(57) A windscreen wiper blade comprises a blade structure (1) carrying a blade rubber (23) for wiping contact with the windscreen (33) and having pivotal connection means (9) for connection with a wiper arm (11) for driving the blade (1) across the screen. The blade structure (1) is so constructed that the blade rubber (23) is inclined at an angle (θ) to a plane (α) extending longitudinally of the blade (1) and substantially bisecting the blade (1) about its axis of symmetry.

EP 0 436 510 A2

FIG.2

## WINDSCREEN WIPER BLADE

This invention relates to a windscreen wiper blade.

A number of problem arises with windscreen wiper blades in an effort to ensure that the blade rubber is at an optimum angle to the windscreen. This is mainly affected by three considerations, viz :-

1. After a blade rubber has been in a parking or non operative position for some time, the blade has a tendency to take on a set at the parking angle. if this set has any permanency, it can seriously affect the wipe produced by the blade and thus the visibility through the windscreen.

2. With the use of curved screens, optimum blade angle must be sacrificed for a compromise which produces the best overall wipe coupled with the need to mount drive spindles for the windscreen wiper in positions which, with a standard blade configuration causes the rubber angle to depart significantly all the time from optimum.

3. With higher vehicle speeds, there is a tendency for windscreen wiper blades to be lifted from the windscreen as a result of the high velocity air flow, commonly known as "windlift", leaving some or all normally wiped areas of the screen un-wiped.

A number of proposals has been made for dealing with these problems ranging from special blade parking arrangements adapted to reduce significantly the pressure exerted on the rubber while the blade is parked to providing twists in the arms carrying the wiper blades to reduce all three problems at the same time.

While a number of these methods have worked satisfactorily, to an extent, in practice, they have tended to be expensive with respect to material and labour used in their construction.

The present invention seeks to provide a windscreen wiper blade which is relatively inexpensive to manufacture and which overcomes or reduces some or all of the above problems.

According to a first aspect of the invention, there is provided a windscreen wiper blade comprising a blade structure carrying a blade rubber for wiping contact with the windscreen and having pivotal connection means for connection with a wiper arm for driving the blade across the screen, in which the blade structure is so constructed that the blade rubber is inclined at an angle to a plane extending longitudinally of the blade and substantially bisecting the blade about its axis of symmetry.

According to a second aspect of the invention, there is provided a windscreen wiper blade comprising a blade structure carrying a blade rubber for wiping contact with the windscreen and having pivotal connection means for connection with a wiper arm for driving the blade across the screen, in which the blade structure is so constructed that the longitudinal central plane through the blade rubber is at an angle to a plane at right angles to the pivot axis of the pivotal connection means for connection of the blade with a wiper arm.

Where the blade structure comprises a harness including a plurality of yokes or levers pivoted together and carrying the blade rubber by means of claws at the ends of at least some of the yokes or levers, the ends of the yokes or levers carrying the claws are preferably twisted adjacent the claws to provide the appropriate inclination of the central longitudinal plane of the blade rubber.

Alternatively, where the harness comprises a main yoke and at least two subsidiary yokes, the main yoke may be twisted on either side of the pivotal connection means.

According to a third aspect of the invention, there is provided a windscreen wiper blade comprising a blade structure carrying a blade rubber for wiping contact with the windscreen and having pivotal connection means for connection with a wiper arm for driving the blade across the screen, in which the blade structure is so constructed that the blade rubber has a curved formation in the longitudinal direction whereby the rubber is also inclined at an angle to a plane extending longitudinally of the blade and substantially bisecting the blade about its axis of symmetry.

Where the blade structure comprises a harness including a plurality of yokes or levers pivoted together and carrying the blade rubber by means of claws at the ends of at least some of the yokes or levers, the axis of the pivot joints between at least some of the yokes or levers is preferably inclined to the longitudinal line of the yokes or levers such as to provide the appropriate longitudinal curvature and thus inclination of the blade rubber.

This may be achieved either by longitudinally offsetting the axes of the pivots or by bending the appropriate ends of the yokes or levers to which subsidiary yokes or levers are pivoted.

The invention will now be described in greater detail, by way of example, with reference to the drawings, in which :-

Figure 1 is a perspective view of a windscreen wiper blade in accordance with a first embodiment of the invention ;

Figure 2 is an end view of the windscreen wiper blade as shown in figure 1.

Figure 3 is a side view of a windscreen wiper blade in accordance with a second embodiment of the invention ;

Figure 4 is an underneath plan view of the windscreen wiper blade as shown in figure 3, and

Figure 5 is an end view of the windscreen wiper blade as shown in figures 3 and 4.

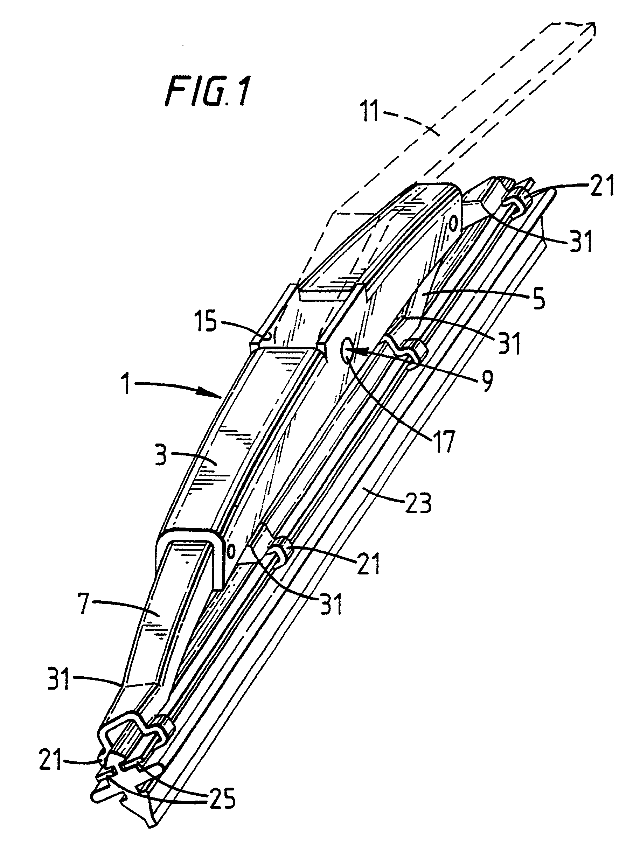

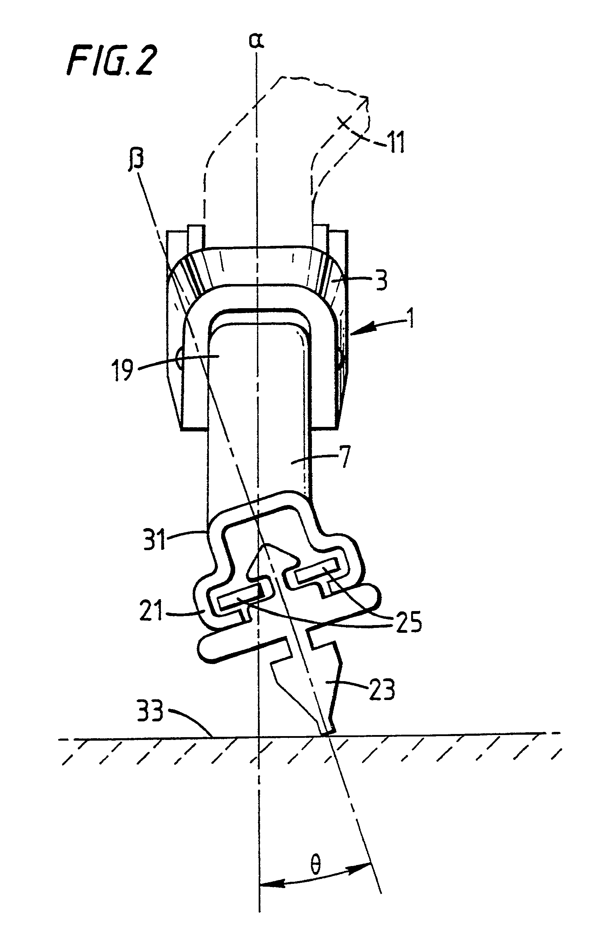

Referring firstly to figures 1 and 2 of the drawings, there is shown a windscreen wiper blade 1 comprising a main yoke 3 and two subsidiary yokes 5 and 7 depending therefrom. The main yoke 1 is provided with an pivotal connection means 9 for the attachment of a windscreen wiper arm (shown in broken lines at 11). To this end, the main yoke 3 has a central aperture 15 in which is located a transverse pivot pin 17.

The subsidiary yokes 5 and 7 are pivoted at their mid points at 19 to the main yoke 3 and carry at their ends claws 21 by means of which the blade rubber 23 is carried. As shown in the drawing, the blade rubber 23 is provided, in known manner, with a supporting vertebra in the form of a pair of rails 25 which are engaged by the claws 21.

In order to arrange that the central longitudinal plane $\alpha$ of the wiper blade (which is at right angles to the pivot pin 17) is at a suitable angle $\theta$ to the longitudinal central plane $\beta$ of the blade rubber (figure 2), the ends of the subsidiary yokes 5 and 7 are twisted at 31.

In the arrangement shown, the windscreen 33 is drawn in a position which it would have in relation to the blade if the problem of permanent set is to be reduced or overcome. With the particular direction of inclination shown, it is to be assumed that parking of the windscreen wiper blade would take place after a movement of the blade from left to right in figure 2. The actual angle $\theta$ of the blade rubber will be dictated by the circumstances of the parking arrangements and the effectiveness in removing the permanent set.

In order to overcome problems of screen curvature and inappropriate drive spindle angles, it is to be expected that the plane $\beta$ of the blade rubber would be normal to the windscreen with the blade itself being at an angle to this normal. Again the actual angles involved would depend on the circumstances met in practice.

However, to reduce the effects of windlift on the blade, it is to be expected that the plane $\beta$ of the blade rubber would not normally be perpendicular to the screen but would lay over in one direction or the other in dependence on the characteristics of the vehicle to which it is fitted.

If two or more of the problems require to be overcome, then a compromise would be adopted between the angle $\theta$ required for parking problems, the angle $\theta$ required for screen curvature or drive spindle correction and the angle $\theta$ needed to reduce the effects of windlift.

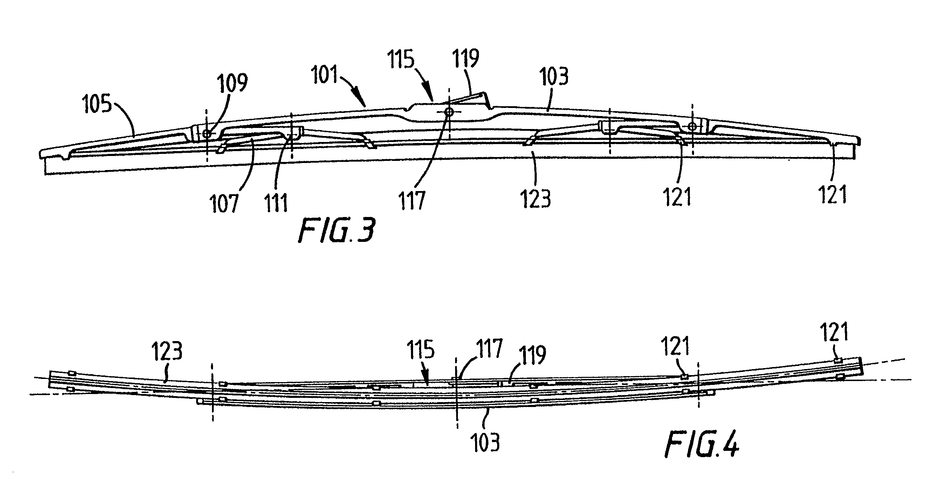

Referring now to figures 3, 4 and 5, there is shown a second embodiment of the invention. In this embodiment, the invention is applied to a windscreen wiper blade 101 comprising a main yoke 103 a pair of secondary yokes 105 and a pair of tertiary yokes 107. The secondary yokes 105 are pivoted to the main yoke 103 at 109 and the tertiary yokes 107 are pivoted to the secondary yokes 105 at 111.

As in the first embodiment, the main yoke 103 is provided with a pivotal connection 113 for the attachment of a windscreen wiper arm (not shown). To this end, the main yoke 103 has a central aperture 115 in which is located a transverse pivot pin 117 on which a connector 119 is located.

The free ends of the secondary and tertiary yokes 105 and 107 carry claws 121 by means of which the blade rubber 123 is carried. As shown in the drawing, the blade rubber 123 is provided in known manner with a supporting vertebra in the form of a pair of rails 125 engaged by the claws 121.

The configuration of the blade 101 in this embodiment is such that the wiper rubber 123 is curved longitudinally as particularly seen in figure 2. This can be achieved, without modification of the parts of the blade with the exception that the pivot axes of the pivots 109 and 111 are offset so that they lie at an angle to the longitudinal axis of the yokes. Depending on the curvature required, this offset arrangement may be provided between all the yokes or only between some of them, for example between the main yoke 103 and the secondary levers 105.

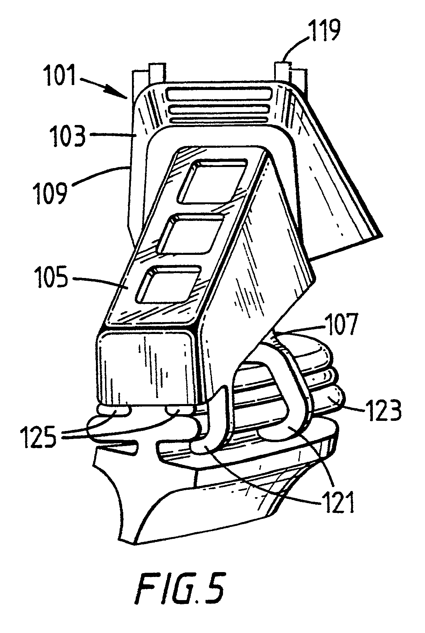

As a result of the blade rubber 123 being forced into a curved configuration, it will necessarily become inclined to the centre line of the blade as can best be seen in figure 5.

It will be appreciated that the principle behind the invention is the variation of the angle of the blade rubber compared to its usual configuration with regard to the wiper blade harness. Thus, while the proposal shown has been for twisting of the ends of the subsidiary yokes adjacent to the claws, twisting of any suitable parts of the harness from adjacent to the pivot pin of the main yoke to adjacent the claws could be used. Furthermore, in the second embodiment, the same effect as the use of offset pivots could be achieved by suitable bending of the yokes adjacent to the pivots.

It will be understood that the exact construction of the wiper blade itself is not significant as far as the effectiveness of the invention is concerned. Thus, for example, other known blade constructions having pivoted yokes can be used. The invention can also be applied to blades in which the blade structure is not in the form of the usual harness, for example, where only a single yoke is provided or where the harness is replaced by a single flexible member to which the blade rubber is attached either at a number of places along its length or continuously. Different shaped wiper rubbers may be used as may different types of vertebra.

The exact construction of the arm attachment may be varied in any known way to provide known attachments to wiper arms. This includes those types in which no pivot pin as such is used and even extends to connections in which the arm and main yoke lie side by side.

## Claims

1. A windscreen wiper blade comprising a blade structure (1, 101) carrying a blade rubber (23, 123) for wiping contact with the windscreen and having pivotal connection means (9, 117) for connection with a wiper arm (11) for driving the blade across the screen, characterised in that the blade structure (1, 101) is so constructed that the blade rubber (23, 123) is inclined at an angle to a plane extending longitudinally of the blade and substantially bisecting the blade about its axis of symmetry.

2. A windscreen wiper blade comprising a blade structure (1, 101) carrying a blade rubber (23) for wiping contact with the windscreen and having pivotal connection means (9) for connection with a wiper arm (11) for driving the blade across the screen, characterised in that the blade structure is so constructed that the longitudinal central plane (β) through the blade rubber (23) is at an angle to a plane (α) at right angles to the pivot axis (17) of the pivotal connection means (9) for connection of the blade with a wiper arm (11).

3. A windscreen wiper blade as claimed in claim 2, characterised in that the blade structure (1) comprises a harness including a plurality of yokes or levers (3, 5, 7) pivoted together and carrying the blade rubber (23) by means of claws (21) at the ends of at least some of the yokes or levers (5, 7), the ends of the yokes or levers (5, 7) carrying the claws being twisted adjacent the claws (21) to provide the appropriate inclination of the central longitudinal plane (β) of the blade rubber (23).

4. A windscreen wiper blade as claimed in claim 3, characterised in that the harness comprises a main yoke (3) and at least two subsidiary yokes (5, 7) and the main yoke (3) is twisted on either side of the pivotal connection means (9).

5. A windscreen wiper blade comprising a blade structure (101) carrying a blade rubber (123) for wiping contact with the windscreen and having pivotal connection means (117) for connection with a wiper arm for driving the blade across the screen, characterised in that the blade structure (101) is so constructed that the blade rubber (123) has a curved formation in the longitudinal direction whereby the rubber (123) is also inclined at an angle to a plane extending longitudinally of the blade and substantially bisecting the blade about its axis of symmetry.

6. A windscreen wiper blade as claimed in claim 5, characterised in that the blade structure (101) comprises a harness including a plurality of yokes or levers (103, 105, 107) pivoted together and carrying the blade rubber (123) by means of claws (121) at the ends of at least some of the yokes or levers (105, 107) and the axis of the pivot joints (109, 111) between at least some of the yokes or levers (103, 105, 107) is inclined to the longitudinal line of the yokes or levers (103, 105, 107) such as to provide the appropriate longitudinal curvature and thus inclination of the blade rubber (123).

7. A windscreen wiper blade as claimed in claim 6, characterised in that the ends of the axes of the pivots (109, 111) are offset longitudinally of the yokes or levers (103, 105, 107).

8. A windscreen wiper blade as claimed in claim 6, characterised in that the appropriate ends of the yokes or levers (103, 105) to which subsidiary yokes or levers (105, 107) are pivoted are bent.

FIG.1

FIG.2

FIG.3

FIG.4

FIG.5